# EUROPÄISCHE PATENTSCHRIFT

(11) **EP 3 045 078 B1**
(45) Veröffentlichungstag und Bekanntmachung des Hinweises auf die Patenterteilung: **05.12.2018**
(21) Anmeldenummer: 15201472.6
(22) Anmeldetag: 21.12.2015
(51) Int. Cl.: A47C 7/40

(54) **SITZMÖBEL**
SEATING
SIÈGES

(30) Priorität: 15.01.2015 DE 102015100598
(43) Veröffentlichungstag der Anmeldung: 20.07.2016
(73) Patentinhaber: himolla Polstermöbel GmbH, 84416 Taufkirchen / Vils (DE)
(72) Erfinder: Aigner, Johann, 84416 Taufkirchen/Vils (DE)
(74) Vertreter: Manitz Finsterwald Patentanwälte PartmbB

(56) Entgegenhaltungen:
- DE-U1- 29 800 428
- DE-U1-202011 051 245
- US-A- 5 104 182
- US-A- 5 524 959

## Beschreibung

Die Erfindung betrifft ein Sitzmöbel, insbesondere ein Sofa, gemäß dem Oberbegriff des Anspruchs 1, wie der Art nach im Wesentlichen aus der US 5 524 959 A bekannt. Ein vergleichbares Sitzmöbel beschreibt ferner die US 5 104 182 A.

Ferner sind aus den Druckschriften DE 10 2012 218 156 A1 und DE 20 2011 051 245 U1 Sitzmöbel bekannt, die mehrere nebeneinander angeordnete Sitzeinheiten mit jeweils einem Sitzteil und einem Rückenteil umfassen, wobei an zumindest einer der Sitzeinheiten das Rückenteil relativ zu dem Sitzteil zwischen einer Sitzstellung und einer Ablagestellung verstellbar ist, in welcher die Rückseite des Rückenteils eine Ablagefläche bildet.

Ferner beschreibt die DE 298 00 428 U1 ein Schlafsofa mit einer dreiteiligen Auflagefläche, wobei benachbarte Teile dieser Auflagefläche verschwenkbar miteinander verbunden sind, sodass zwei dieser Teile dachförmig aufgestellt werden können, um das mittlere Teil als Rückenlehne nutzen zu können.

Grundsätzlich ist es wünschenswert, die Handhabung beim Verstellen des Rückenteils noch weiter zu verbessern sowie den Platzbedarf in der Ablagestellung zu optimieren.

Aufgabe der Erfindung ist es daher, ein Sitzmöbel der eingangs genannten Art zu schaffen, das den vorstehend genannten Anforderungen gerecht wird.

Die Lösung dieser Aufgabe erfolgt durch die Merkmale des Anspruchs 1.

Erfindungsgemäß ist vorgesehen, dass das Rückenteil zumindest zwei in der Ablagestellung gemeinsam die Ablagefläche bildende Ablageplatten umfasst, für die ein beim Verstellen des Rückenteils wirksamer Stellmechanismus vorgesehen ist, der die Ablageplatten zwischen der Sitzstellung und der Ablagestellung relativ zueinander bewegt, insbesondere verschwenkt.

Der Stellmechanismus sorgt beim Verstellen des Rückenteils dafür, dass die Ablageplatten derart relativ zueinander bewegt werden, dass in der Ablagestellung die beiden Platten gemeinsam die Ablagefläche bilden. Zusätzliche Betätigungsvorgänge des Benutzers sind nicht erforderlich. Zum Erreichen der Ablagestellung genügt es, wenn das Rückenteil aus der Sitzstellung in die Ablagestellung gebracht wird.

Weiterbildungen der Erfindung sind auch in den abhängigen Ansprüchen, der Beschreibung sowie der Zeichnung angegeben.

Gemäß einer Ausführungsform sind die Ablageplatten gegensinnig bewegbar, insbesondere verschwenkbar. Die Ablageplatten können gelenkig miteinander verbunden sein.

Des Weiteren kann vorgesehen sein, dass eine erste Ablageplatte trapezförmig und eine zweite Ablageplatte rechteckig ist.

Gemäß einem weiteren Ausführungsbeispiel beträgt die Tiefe einer ersten Ablageplatte etwa das 2- bis 7-fache der Tiefe einer zweiten Ablageplatte, insbesondere etwa das 3- bis 5-fache.

Des Weiteren kann vorgesehen sein, dass eine erste Ablageplatte stets parallel zur Rückseite des Rückenteils orientiert oder durch zumindest einen Teil der Rückseite des Rückenteils selbst gebildet ist.

Vorzugsweise wird beim Verstellen des Rückenteils in die Ablagestellung ein in der Sitzstellung unterer Bereich des Rückenteils angehoben. Hierdurch kann dafür gesorgt werden, dass die Rückseite des Rückenteils in der Ablagestellung auf einem Niveau liegt, das für einen auf einem benachbarten Sitzteil sitzenden Benutzer eine bequeme Ablagemöglichkeit bietet. Des Weiteren kann das Anheben des Rückenteils bzw. die hierfür vorgesehene Stelleinrichtung von dem die Ablageplatten bewegenden Stellmechanismus genutzt werden bzw. einen Bestandteil dieses Stellmechanismus bilden.

In einem Ausführungsbeispiel ist vorgesehen, dass eine Verstellbewegung einer zweiten Ablageplatte gemeinsam mittels des Rückenteils und einer an einer Basis verankerten Rückhalteeinrichtung steuerbar ist. Das Verstellen des Rückenteils wird hierbei für das Bewegen der zweiten Ablageplatte ausgenutzt, wobei es aber nicht das Verstellen des Rückenteils alleine ist, welches dafür sorgt, dass die zweite Ablageplatte in die Ablagestellung gelangt. Zusätzlich ist nämlich die an der Basis verankerte Rückhalteeinrichtung vorgesehen, die zusammen mit dem Rückenteil die Bewegung der zweiten Ablageplatte in der gewünschten Weise steuert.

Bei der Basis des Sitzmöbels kann es sich beispielsweise um den Korpus als wesentliches tragendes Element des Sitzmöbels handeln. Dies ist aber nicht zwingend. Separate Bauteile oder Komponenten, die fest mit dem Korpus verbunden sind, gelten im Rahmen dieser Offenbarung ebenfalls als Basis des Sitzmöbels bzw. als Bestandteile der Basis.

Gemäß einem bevorzugten Ausführungsbeispiel kann die an der Basis verankerte Rückhalteeinrichtung derart wirksam sein, dass die zweite Ablageplatte um einen zusammen mit dem Rückenteil bewegbaren Schwenkbereich verschwenkbar ist und die Rückhalteeinrichtung an der zweiten Ablageplatte in einem Abstand von dem Schwenkbereich angreift. So können einerseits die Bewegung des Rückenteils, z.B. die vorstehend erwähnte Anhebebewegung eines in der Sitzstellung unteren Bereiches des Rückenteils, und andererseits die Rückhalteeinrichtung zusammenwirken, um die zweite Ablageplatte zu verschwenken. Hierdurch kann erreicht werden, dass die zweite Ablageplatte beispielsweise aus einer eingeklappten oder eingefalteten Stellung heraus derart verschwenkt wird, dass sie bei Erreichen der Ablagestellung mit der ersten Ablageplatte ausgerichtet ist und die beiden Ablageplatten gemeinsam die Ablagefläche bilden.

Die Rückhalteeinrichtung kann gegen eine Rückstellkraft in der Länge veränderlich sein. Insbesondere handelt es sich bei der Rückhalteeinrichtung um ein elastisches Band oder einen elastischen Gurt. Dies erleichtert die Konstruktion des Sitzmöbels, da keine exakte Längenabstimmung der Rückhalteeinrichtung erforderlich ist, um die zweite Ablageplatte in die Ablagestellung bewegen zu können. Insbesondere kann mit einer derartigen Rückhalteeinrichtung die zweite Ablageplatte beim Herstellen der Ablagestellung zuverlässig gegen einen Anschlag gezogen werden, der die Ablagestellung der zweiten Ablageplatte definiert und für eine exakte Ausrichtung der zweiten Ablageplatte zur ersten Ablageplatte sorgt.

Gemäß einem weiteren Ausführungsbeispiel ist vorgesehen, dass das Rückenteil über einen Beschlag mit einer Basis gelenkig verbunden ist. Wie bereits erwähnt, kann es sich bei dieser Basis um den Korpus oder um eine separate, mit dem Korpus fest verbundene Komponente des Sitzmöbels handeln. Bei dem Beschlag handelt es sich insbesondere um einen Hebe-Klappbeschlag, der nicht nur ein Verschwenken des Rückenteils um eine Achse ermöglicht, sondern das Rückenteil außerdem beim Verstellen auf ein vorgegebenes Niveau anhebt.

Der das Rückenteil mit der Basis verbindende Beschlag kann einen Viergelenkhebel umfassen. Auf diese Weise kann eine für den Benutzer vorteilhafte Zwangssteuerung des Rückenteils beim Verstellen realisiert werden, die einen optimalen Bewegungsablauf für das Rückenteil und somit eine einfache und zuverlässige Bedienung durch den Benutzer sicherstellt.

Der Beschlag kann zwei, insbesondere ein- oder mehrfach abgewinkelte, Gelenkhebel umfassen, die am Rückenteil und an der Basis an jeweils voneinander beabstandeten Drehachsen angelenkt sind. Dabei kann vorgesehen sein, dass in der Sitzstellung die Drehachsen des Rückenteils in einer Ebene liegen, die zumindest im Wesentlichen parallel zu einer Ebene verläuft, in der die Drehachsen der Basis liegen. Vorzugsweise liegen die Drehachsen des Rückenteils in der Ablagestellung in einer Ebene, die zumindest im Wesentlichen horizontal verläuft.

Gemäß einem weiteren Ausführungsbeispiel ist vorgesehen, dass die Rückwand in der Sitzstellung die Ablageplatten zumindest teilweise verdeckt. Hierdurch kann das erfindungsgemäße Sitzmöbel in einer freistehenden, d.h. nicht an einer Wand stehenden, Anordnung genutzt werden, ohne dass die Ablageplatten oder Teile des Stellmechanismus in störender Weise sichtbar wären.

Sitzmöbel der hier in Rede stehenden Art stellen insofern eine Herausforderung für die Konstrukteure dar, als bei stets hohen Anforderungen an das Design die beiden Funktionen "sitzen" einerseits und "Ablagefläche bereitstellen" andererseits konstruktiv berücksichtigt werden müssen. Die Ablagefläche darf nicht zu klein sein. Gleichzeitig darf das Rückenteil nicht zu "wuchtig" ausfallen, da es in der Sitzstellung die gewohnte Anlehnmöglichkeit für den Benutzer bieten muss und zudem zu dem Rückenteil des oder der benachbarten Sitzeinheiten passen muss. Ferner muss ausreichend Raum für die Verstellbewegung des Rückenteils vorhanden sein. Dieser Raum konkurriert mit dem zur Unterbringung der Ablageplatten zur Verfügung stehenden Raum. Hinzu kommt die vorstehend erwähnte Rückwand, auf die in vielen Fällen nicht verzichtet werden soll.

Vor diesem Hintergrund ist eine Ausführungsform der Erfindung besonders vorteilhaft, bei der in der Ablagestellung eine zwischen einer ersten Ablageplatte und der Rückwand vorhandene Lücke durch eine zweite Ablageplatte zumindest im Wesentlichen geschlossen oder überbrückt ist. Hierbei kann folglich die zweite Ablageplatte dazu benutzt werden, die Lücke zu schließen bzw. zu überbrücken, wobei gleichzeitig die zweite Ablageplatte die von der ersten Ablageplatte bereitgestellte Ablagefläche vergrößert. Die Entstehung der Lücke kann durch das Verstellen des Rückenteils in die Ablagestellung bedingt sein. So kann es beispielsweise erforderlich sein, dass entweder vor dem Verstellen des Rückenteils oder gemeinsam mit dem Verstellen des Rückenteils die Rückwand aus einer beispielsweise im Wesentlichen aufrechten Sitzstellung herausbewegt wird, z.B. durch Verschwenken nach hinten. Eine hierbei entstehende Lücke zwischen der Rückwand und dem Rückenteil kann durch die zweite Ablageplatte geschlossen oder überbrückt werden.

Vor diesem Hintergrund ist es erfindungsgemäß vorgesehen, dass die Rückwand zwischen einer Sitzstellung und einer Ablagestellung verstellbar, beispielsweise verschwenkbar, ist.

Die Rückwand kann in der Ablagestellung über die durch die Ablagefläche definierte Ebene hinaus nach oben vorstehen. Insbesondere ist die Rückwand in der Ablagestellung nach hinten geneigt.

Es ist erfindungsgemäß also nicht zwingend, dass die Rückwand vollständig nach hinten umgelegt wird und eine zumindest im Wesentlichen horizontale Stellung einnimmt. Dies minimiert den Platzbedarf des erfindungsgemäßen Sitzmöbels im Bereich hinter dem Sitzmöbel. Es ist deshalb möglich, das erfindungsgemäße Sitzmöbel relativ nahe an einer Wand zu positionieren und trotzdem eine vergleichsweise große Ablagefläche bereitzustellen.

Das Konzept einer nach hinten verschwenkbaren Rückwand, eines nach vorne verschwenkbaren Rückenteils mit einer ersten Ablageplatte, des Zulassens einer hierbei entstehenden Lücke zwischen Rückwand und Rückenteil und des Vorsehens einer zweiten Ablageplatte, die durch einen Stellmechanismus geeignet bewegt wird, um einerseits die entstehende Lücke zu schließen bzw. zu überbrücken und andererseits zur Ablagefläche beizutragen, ermöglicht eine einfache Bedienung bei großer Ablagefläche und geringem Platzbedarf hinter dem Sitzmöbel. Insbesondere ist es möglich, dass sich die Rückseite des verstellbaren Rückenteils vergleichsweise weit nach unten erstreckt und folglich mit einer entsprechend großen Ablageplatte versehen werden kann.

Die Rückwand kann mit einer Basis des Sitzmöbels gelenkig verbunden sein.

Gemäß einem weiteren Ausführungsbeispiel ist die Rückwand um eine Achse verschwenkbar, die mit einer Drehachse eines Beschlags zusammenfällt, über den das Rückenteil mit einer Basis gelenkig verbunden ist. Die Konstruktion des Sitzmöbels lässt sich hierdurch weiter vereinfachen.

Des Weiteren kann erfindungsgemäß vorgesehen sein, dass die Ablageplatten in der Sitzstellung zusammengeklappt oder zusammengefaltet sind. Insbesondere kann vorgesehen sein, dass die Ablageplatten in der Sitzstellung flächig aneinander anliegen. Vorzugsweise ist vorgesehen, dass die Ablageplatten in der Ablagestellung eine im Wesentlichen ebene Ablagefläche bilden und insbesondere bündig aneinander anschließen.

Wie vorstehend bereits in einem anderen Zusammenhang erwähnt, kann es von Vorteil sein, wenn gemäß einem weiteren Ausführungsbeispiel der Erfindung die Ablageplatten in der Sitzstellung zumindest im Wesentlichen vollständig verdeckt sind.

Das Rückenteil kann ein Kopfteil tragen, das in der Sitzstellung die Ablageplatten zumindest teilweise verdeckt. Das Kopfteil kann relativ zum Rückenteil verstellbar oder fest angeordnet sein.

Das Kopfteil kann den oberen Abschluss eines als Aufnahmeraum dienenden zurückspringenden Bereiches an der Rückseite des Rückenteils bilden, wobei dieser Aufnahmeraum dazu dient, die Ablageplatten und gegebenenfalls eine Rückwand derart aufzunehmen, dass in der Sitzstellung die Rückseite der Rückwand und die Rückseite des Kopfteils zumindest im Wesentlichen in einer Ebene liegen. Hierdurch kann in der Sitzstellung eine optisch ansprechende Rückseite des Sitzmöbels gewährleistet werden.

Die Erfindung wird im Folgenden beispielhaft unter Bezugnahme auf die Zeichnung beschrieben. Es zeigen:
- Fig. 1 und 2: ein Ausführungsbeispiel eines erfindungsgemäßen Sitzmöbels in der Sitzstellung (Fig. 1) und in der Ablagestellung (Fig. 2), und
- Fig. 3 bis 5: jeweils in einer perspektivischen Ansicht ein weiteres Ausführungsbeispiel eines erfindungsgemäßen Sitzmöbels in der Sitzstellung (Fig. 3), in einer Zwischenstellung (Fig. 4) und in der Ablagestellung (Fig. 5).

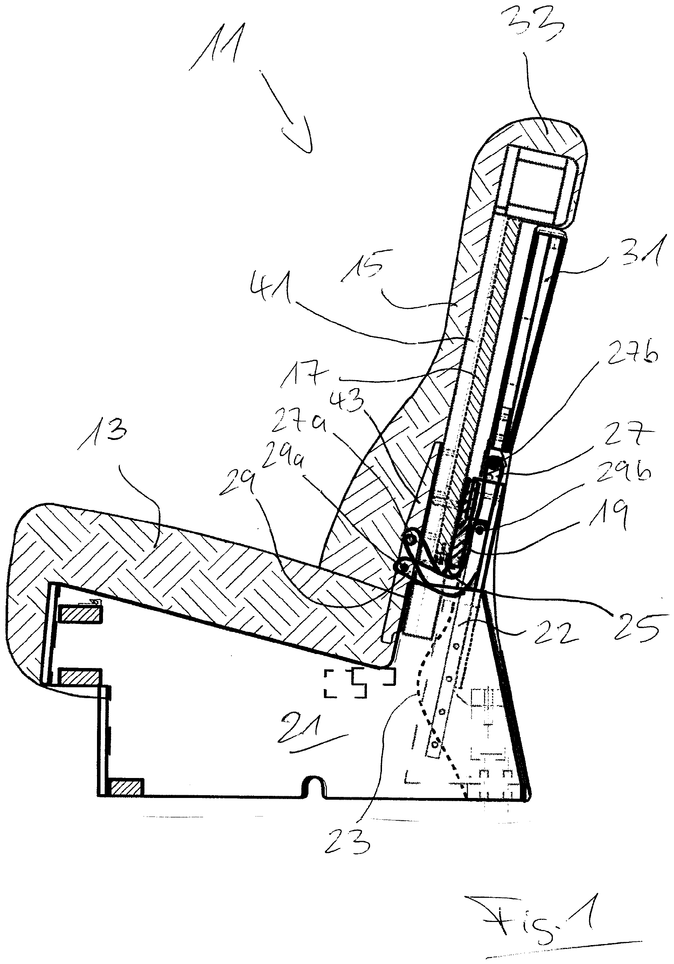

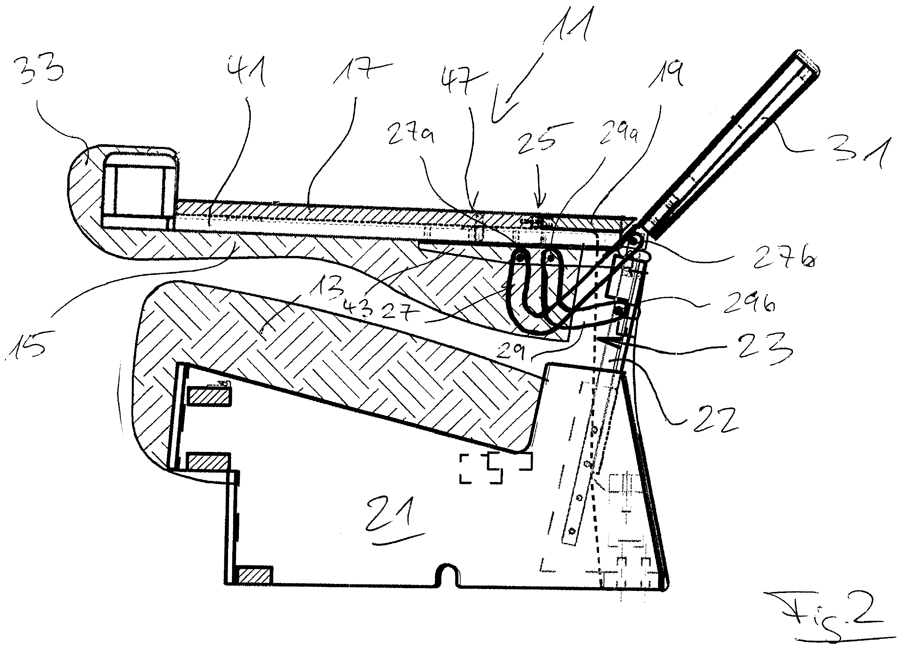

In Fig. 1 und 2 ist jeweils im Schnitt eine Sitzeinheit dargestellt, die Bestandteil eines Mehrsitzers, beispielsweise eines Zweier- oder Dreiersofas, mit mehreren nebeneinander angeordneten Sitzeinheiten ist. Beispielsweise handelt es sich bei der dargestellten Sitzeinheit 11 um das Mittelteil eines Dreisitzers, bei dem in nachstehend näher beschriebener Weise ein als Rückenlehne für einen Benutzer dienendes Rückenteil 15 nach vorne umgeklappt werden kann, um eine Ablagefläche 47 bereitzustellen, die für auf den beiden Seitenteilen des Dreisitzers sitzende Personen beispielsweise zum Abstellen von Getränken zugänglich ist.

Bei der dargestellten Sitzeinheit 11 trägt ein Korpus 21 ein gepolstertes Sitzteil 13 sowie einen fest mit dem Korpus 21 verbundenen Träger 22, an welchem über einen Beschlag 27, 29, der nachstehend erläutert wird, ein verstellbares Rückenteil 15 sowie eine verstellbare Rückwand 31 abgestützt sind.

Das Rückenteil 15 schließt am oberen Ende mit einem nach hinten vorstehenden Kopfteil 33 ab. Der dadurch entstehende Aufnahmeraum an der Rückseite des Rückenteils 15 nimmt in der Sitzstellung gemäß Fig. 1 zwei Auflageplatten 17, 19, auf die nachstehend näher eingegangen wird, sowie die bereits erwähnte Rückwand 31 auf. Die Rückseite der Rückwand 31 und die rückwärtige Fläche des Kopfteils 13 liegen in dieser Sitzstellung etwa in einer Ebene.

Aufgrund der Rückwand 31 ist der rückwärtige Bereich des Rückenteils 15 unterhalb des Kopfteils 33 von außen nicht einsehbar. Die im Bereich unterhalb des Kopfteils 31 vorgesehenen Komponenten, insbesondere die beiden den Beschlag bildenden Gelenkhebel 27, 29, stehen in keiner Konfiguration der erfindungsgemäßen Sitzeinheit nach hinten vor, können also permanent beispielsweise von einer Polsterung, einem Bezug oder einer Blende verdeckt sein, so dass auch dieser Bereich der Sitzeinheit 11 von außen nicht einsehbar ist.

Das Rückenteil 15 ist mit einer Trägerplatte 17 versehen, an der in einem unteren Bereich an ihrer Vorderseite ein Träger 43 befestigt ist. An ihrer Rückseite ist die Trägerplatte 41 mit einer ersten Ablageplatte 17 versehen, die in der Ablagestellung gemäß Fig. 2 den größeren Teil der Ablagefläche 47 bereitstellt.

Die beiden bereits erwähnten Hebel 27, 29 sind an längs des Trägers 43 beabstandeten Stellen mit dem Träger 43 gelenkig verbunden, und zwar an parallelen Drehachsen 27a und 29a.

Beide Gelenkhebel 27, 29 sind abgewinkelt bzw. gekrümmt, wobei die beiden Schenkel des Gelenkhebels 27 einen Winkel von weniger als 90° einschließen und von unterschiedlicher Länge sind, wohingegen bei dem anderen Hebel 29 die beiden Schenkel etwa die gleiche Länge besitzen und einen Winkel von 90° einschließen.

Mit ihren anderen Enden sind die Hebel 27, 29 gelenkig mit dem Träger 22 verbunden, der am Korpus 21 befestigt ist. Die beiden hierdurch definierten Drehachsen 27b und 29b sind folglich bezüglich des Sitzmöbels stationär.

Durch die Form, die Länge und die Positionierung der Drehachsen eines solchen Doppel- oder Viergelenkhebels lassen sich Anfangsposition, Endposition sowie Bewegungsablauf der hier von dem Rückenteil 15 gebildeten, zu verstellenden Komponente gezielt vorgeben.

In der Sitzstellung gemäß Fig. 1 liegen das Rückenteil 15 als Ganzes, die Trägerplatte 41, die erste Ablageplatte 17, die Rückwand 31, eine die beiden am Rückenteil 15 liegenden Achsen 27a, 29a enthaltene Ebene sowie eine die beiden stationären Achsen 27b, 29b enthaltene Ebene etwa in parallel zueinander verlaufenden Ebenen, die bezüglich der Vertikalen geringfügig nach hinten geneigt sind.

Eine zweite Ablageplatte 19, deren Tiefe in diesem Ausführungsbeispiel ungefähr ein Viertel der Tiefe der ersten Ablageplatte 17 beträgt, ist mit der ersten Ablageplatte 17 gelenkig verbunden, beispielsweise mittels eines Scharniers, wodurch ein Schwenkbereich 25 definiert ist.

In der Sitzstellung gemäß Fig. 1 sind die Ablageplatten 17, 19 derart zusammengefaltet oder zusammengeklappt, dass sie flächig aneinander anliegen. Die zweite Ablageplatte 19 ist mit dem Korpus 21 über einen als gestrichelte Linie angedeuteten elastischen Gurt 23 verbunden, der lediglich Zugkräfte übertragen kann und als eine Rückhalteeinrichtung zum Bewegen der zweiten Ablageplatte 19 beim Herstellen der Ablagestellung gemäß Fig. 2 dient.

Mit den Gelenkhebeln 27, 29 ist die zweite Ablageplatte 19 nicht unmittelbar verbunden. Es sind lediglich die bereits erwähnte, einen Schwenkbereich 25 definierende gelenkige Verbindung der zweiten Ablageplatte 19 mit der ersten Ablageplatte 17 und - an einer von dem Schwenkbereich 25 beabstandeten Stelle (vgl. insbesondere Fig. 2) - die Anbindung des die Rückhalteeinrichtung bildenden elastischen Gurtes 23 an die zweite Ablageplatte 19 vorgesehen.

Die Rückwand 31 ist am stationären Träger 22 schwenkbar gelagert, und zwar um jene Drehachse 27b, um welche der Gelenkhebel 27 des das Rückenteil 15 an die von dem Korpus 21 und dem Träger 22 gebildete Basis koppelnden Beschlags schwenkbar ist. Dabei ist die Rückwand 31 mit diesem Hebel 27 derart zwangsgekoppelt, dass die Rückwand 31 nur gemeinsam mit diesem Hebel 27 verschwenkt werden kann, wobei zu jedem Zeitpunkt die Rückwand 31 und der am Träger 22 angelenkte, längere Schenkel dieses Gelenkhebels 27 etwa in einer gemeinsamen Ebene liegen.

Wenn ausgehend von der Sitzstellung gemäß Fig. 1 das Rückenteil 15 von einem Benutzer von Hand nach vorne umgeklappt und somit in die Ablagestellung gemäß Fig. 2 verschwenkt wird, erfolgt aufgrund des durch die beiden Gelenkhebel 27, 29 vorgegebenen Bewegungsablaufs des Rückenteils 15 eine Anhebung des in der Sitzstellung unteren Bereiches des Rückenteils 15. In der Ablagestellung gemäß Fig. 2 ist die gepolsterte Vorderseite des Rückenteils 15 an jeder Stelle von der Polsterung des Sitzteils 13 beabstandet, wobei die nunmehr mit ihrer Rückseite den größeren Teil der Ablagefläche 47 bildende erste Ablageplatte 17 horizontal orientiert ist.

Beim Verstellen des Rückenteils 15 in die Ablagestellung wird die Rückwand 31 um die Achse 27b nach hinten geneigt. In der Ablagestellung gemäß Fig. 2 schließt die Rückwand 31 mit der Vertikalen etwa einen Winkel von 45° ein.

Eine in dieser Ablagestellung gemäß Fig. 2 vorhandene Lücke zwischen dem unteren bzw. hinteren Ende der ersten Ablageplatte 17 einerseits und der Vorderseite der Rückwand 31 andererseits ist durch die zweite Ablageplatte 19 geschlossen bzw. überbrückt. In der Ablagestellung gemäß Fig. 2 liegt die zweite Ablageplatte 19 in einer gemeinsamen Ebene mit der ersten Ablageplatte 17, wobei die beiden Ablageplatten 17, 19 bündig aneinander anschließen und eine durchgehende ebene Ablagefläche bilden.

Der die beiden Gelenkhebel 27, 29, die Anbindung der zweiten Ablageplatte 19 an die erste Ablageplatte 17 und den als Rückhalteeinrichtung dienenden elastischen Gurt 23 umfassende Stellmechanismus sorgt dafür, dass auch die zweite Ablageplatte 19 die in Fig. 2 dargestellte Ablagestellung erreicht. Das gelenkig mit der ersten Ablageplatte 17 verbundene Ende der zweiten Ablageplatte 19 wird beim Verstellen des Rückenteils 15 angehoben und nach vorne bewegt. Dabei hält der mit Abstand von dem Schwenkbereich 25 an der zweiten Ablenkplatte 19 angreifende elastische Gurt 23 die zweite Ablageplatte 29 zurück. Dies hat zur Folge, dass - von dem Rückenteil 15 bzw. der ersten Ablageplatte 17 aus betrachtet - die zweite Ablageplatte 19 von dem elastischen Bandgurt 23 um den Schwenkbereich 25 nach unten geschwenkt wird, bis die zweite Ablageplatte 29 zur Anlage an der Trägerplatte 41 kommt, womit die zweite Ablageplatte 19 parallel zur ersten Ablageplatte 17 ausgerichtet ist.

Mit anderen Worten sorgt die Rückhalteeinrichtung 23 für ein zuverlässiges Entfalten oder Ausklappen der beiden Ablageplatten 17, 19, wenn das Rückenteil 15 in die Ablagestellung gemäß Fig. 2 verschwenkt wird.

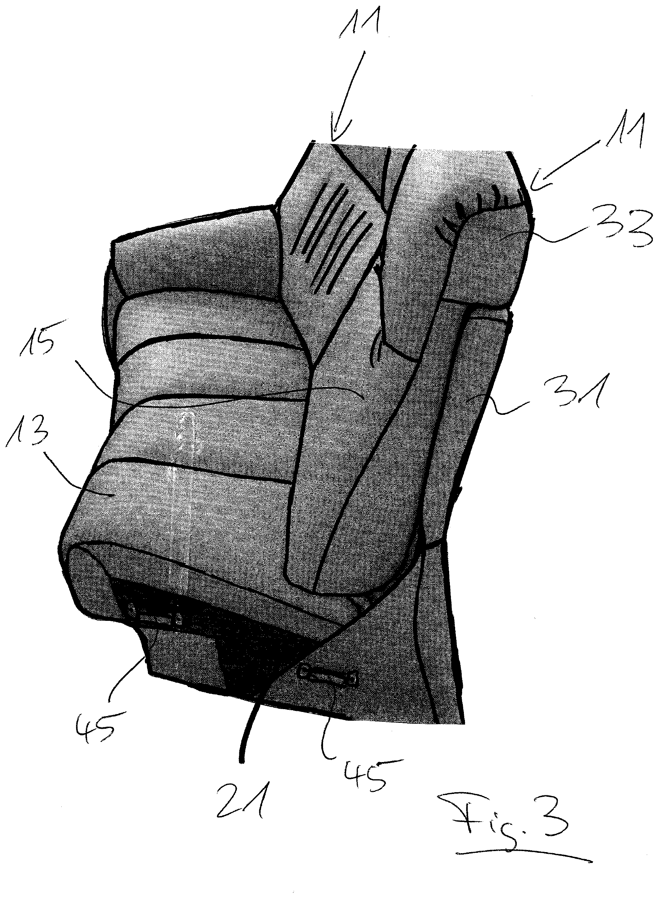

In Fig. 2 ist außerdem dargestellt, dass die zweite Ablageplatte 19 an ihrem unteren bzw. hinteren Ende entsprechend der Neigung der Rückwand 31 in der Ablagestellung gemäß Fig. 2 abgeschrägt ist, um die Lücke zwischen der ersten Ablageplatte 17 und der Rückwand 31 vollständig zu schließen bzw. zu überbrücken. Die Fig. 3 bis 5 zeigen ein erfindungsgemäßes Sitzmöbel, das als Dreisitzersofa ausgebildet ist, wobei die linke Sitzeinheit nicht dargestellt ist. An der linken Seite der hier dargestellten mittleren Sitzeinheit 11, deren Rückenteil 15 in erfindungsgemäßer Weise verstellbar ist, sind Kopplungselemente 45 vorgesehen, die zur Anbindung der hier nicht dargestellten linken Sitzeinheit dienen. Derartige Kopplungselemente 45 sind grundsätzlich bekannt, um Korpusse benachbarter Einheiten miteinander zu verbinden.

Fig. 3 zeigt die mittlere Sitzeinheit 11 in der Sitzstellung. Die Rückwand 31 ist in dem zurückspringenden Aufnahmeraum hinter dem Rückenteil 15 und unterhalb des Kopfteils 33 des Rückenteils 15 aufgenommen.

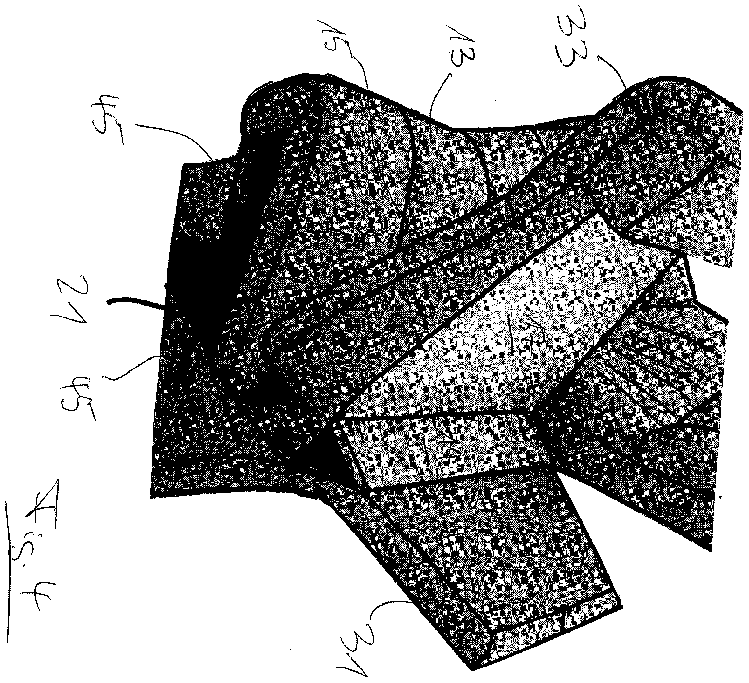

Fig. 4 zeigt eine Zwischenstellung beim Verstellen des Rückenteils 15. Die Rückwand 31 ist nach hinten geneigt. Die schmale zweite Ablageplatte 19 liegt nicht mehr flächig an der an der Rückseite des Rückenteils 15 angebrachten ersten Ablageplatte 17 an, d.h. die beiden Ablageplatten 17, 19 sind in dieser Zwischenstellung bereits zum Teil entfaltet bzw. auseinandergeklappt. Hierfür sorgt eine in Fig. 4 nicht dargestellte Rückhalteeinrichtung, wie sie im Einleitungsteil oder vorstehend z.B. in Verbindung mit Fig. 1 und Fig. 2 beschrieben worden ist und die beispielsweise von einem elastischen Bandgurt gebildet wird.

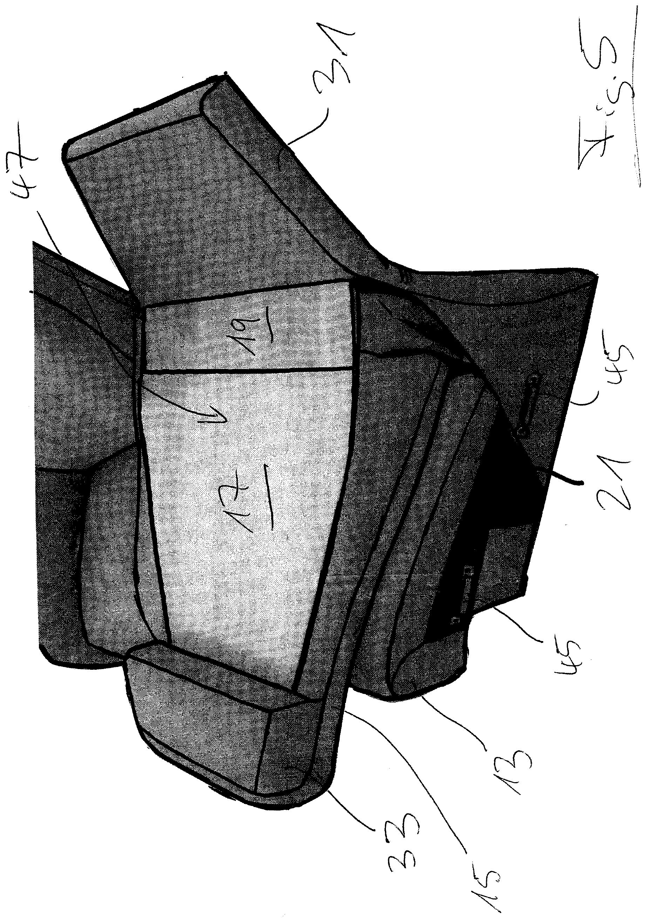

In Fig. 5 ist die Ablagestellung dargestellt, in welcher die erste Ablageplatte 17 und die zweite Ablageplatte 19 bündig aneinander anschließen und gemeinsam eine ebene, durchgehende Ablagefläche 47 bilden, die horizontal orientiert ist.

Im vorderen Bereich ist die Ablagefläche 47 von dem Kopfteil 33 und im hinteren Bereich von der schräg nach hinten geneigten Rückwand 31 abgeschlossen.

In Fig. 5 ist außerdem zu erkennen, dass die erste Ablageplatte 17 entsprechend der Form des Rückenteils 15 im Wesentlichen trapezförmig ausgebildet ist, wohingegen die zweite Ablageplatte 19 ein vergleichsweise schmales Rechteck bildet.

Hinsichtlich der in den Fig. 3 bis 5 nicht dargestellten Komponenten und deren Funktionalität wird auf die Fig. 1 und 2 und die diesbezüglichen vorstehenden Ausführungen verwiesen.

### Bezugszeichenliste

- 11: Sitzeinheit
- 13: Sitzteil
- 15: Rückenteil
- 17: erste Ablageplatte
- 19: zweite Ablageplatte
- 21: Korpus
- 22: Träger
- 23: Rückhalteeinrichtung
- 25: Schwenkbereich
- 27: Gelenkhebel
- 27a: Drehachse
- 27b: Drehachse
- 29: Gelenkhebel
- 29a: Drehachse
- 29b: Drehachse
- 31: Rückwand
- 33: Kopfteil
- 41: Trägerplatte
- 43: Träger
- 45: Kopplungselement
- 47: Ablagefläche

## Patentansprüche

1. Sitzmöbel, insbesondere Sofa,
umfassend zumindest zwei, vorzugsweise drei, nebeneinander angeordnete Sitzeinheiten (11) mit jeweils einem Sitzteil (13) und einem Rückenteil (15),
wobei an zumindest einer der Sitzeinheiten (11) das Rückenteil (15) relativ zu dem Sitzteil (13) zwischen einer Sitzstellung und einer Ablagestellung verstellbar ist, in welcher die Rückseite des Rückenteils (15) eine Ablagefläche (47) bildet,
wobei hinter dem Rückenteil (15) eine Rückwand (31) angeordnet ist und das Rückenteil (15) zumindest zwei in der Ablagestellung gemeinsam die Ablagefläche (47) bildende Ablageplatten (17, 19) umfasst, für die ein beim Verstellen des Rückenteils (15) wirksamer Stellmechanismus vorgesehen ist, der die Ablageplatten (17, 19) zwischen der Sitzstellung und der Ablagestellung relativ zueinander bewegt, insbesondere verschwenkt;
**dadurch gekennzeichnet, dass**
die Rückwand (31) durch Verstellen des Rückenteils (15) verstellbar ist.

2. Sitzmöbel nach Anspruch 1,
**dadurch gekennzeichnet,**
**dass** beim Verstellen des Rückenteils (15) in die Ablagestellung ein in der Sitzstellung unterer Bereich des Rückenteils (15) angehoben wird.

3. Sitzmöbel nach Anspruch 1 oder 2,
**dadurch gekennzeichnet,**
**dass** eine Verstellbewegung einer zweiten Ablageplatte (19) gemeinsam mittels des Rückenteils (15) und einer an einer Basis (21, 22) verankerten Rückhalteeinrichtung (23) steuerbar ist.

4. Sitzmöbel nach Anspruch 3,
**dadurch gekennzeichnet,**
**dass** die zweite Ablageplatte (19) um einen zusammen mit dem Rückenteil (15) bewegbaren Schwenkbereich (25) verschwenkbar ist, wobei die Rückhalteeinrichtung (23) an der zweiten Ablageplatte (19) in einem Abstand von dem Schwenkbereich (25) angreift.

5. Sitzmöbel nach Anspruch 3 oder 4,
**dadurch gekennzeichnet,**
**dass** die Rückhalteeinrichtung (23) gegen eine Rückstellkraft längenveränderlich ist und insbesondere zumindest ein elastisches Band oder zumindest einen elastischen Gurt umfasst.

6. Sitzmöbel nach einem der vorhergehenden Ansprüche,
**dadurch gekennzeichnet,**
**dass** das Rückenteil (15) über einen Beschlag (27, 29), insbesondere einen Hebe-Klappbeschlag, mit einer Basis (21, 22) gelenkig verbunden ist, wobei insbesondere der Beschlag einen Viergelenkhebel (27, 29) umfasst.

7. Sitzmöbel nach Anspruch 6,
**dadurch gekennzeichnet,**
**dass** der Beschlag zwei, insbesondere ein- oder mehrfach abgewinkelte, Gelenkhebel (27, 29) umfasst, die am Rückenteil (15) und an der Basis (21, 22) jeweils an voneinander beabstandeten Drehachsen (27a, 27b, 29a, 29b) angelenkt sind.

8. Sitzmöbel nach Anspruch 7,
**dadurch gekennzeichnet,**
**dass** in der Sitzstellung die Drehachsen (27a, 29a) des Rückenteils (15) in einer Ebene liegen, die zumindest im Wesentlichen parallel zu einer Ebene verläuft, in der die Drehachsen (27b, 29b) der Basis (21, 22) liegen.

9. Sitzmöbel nach Anspruch 7 oder 8,
**dadurch gekennzeichnet,**
**dass** in der Ablagestellung die Drehachsen (27a, 29a) des Rückenteils (15) in einer Ebene liegen, die zumindest im Wesentlichen horizontal verläuft.

10. Sitzmöbel nach einem der vorhergehenden Ansprüche,
**dadurch gekennzeichnet,**
**dass** die Rückwand (31) in der Sitzstellung die Ablageplatten (17, 19) zumindest teilweise verdeckt.

11. Sitzmöbel nach Anspruch 10,
**dadurch gekennzeichnet,**
**dass** in der Ablagestellung eine zwischen einer ersten Ablageplatte (17) und der Rückwand (31) vorhandene Lücke durch eine zweite Ablageplatte (19) zumindest im Wesentlichen geschlossen oder überbrückt ist.

12. Sitzmöbel nach Anspruch 10 oder 11,
**dadurch gekennzeichnet,**
**dass** die Rückwand (31) zwischen einer Sitzstellung und einer Ablagestellung verstellbar ist, insbesondere verschwenkbar.

13. Sitzmöbel nach einem der Ansprüche 10 bis 12,
**dadurch gekennzeichnet,**
**dass** die Rückwand (31) durch Verstellen des Rückenteils (15) mittels eines Beschlags (27, 29) verstellbar ist, über den das Rückenteil (15) mit einer Basis (21, 22) gelenkig verbunden ist.

14. Sitzmöbel nach einem der Ansprüche 10 bis 13,
**dadurch gekennzeichnet,**
**dass** das Rückenteil (15) und die Rückwand (31) durch einen Beschlag (27, 29), insbesondere einen Hebe-Klappbeschlag, zwangsgekoppelt sind.

15. Sitzmöbel nach einem der Ansprüche 10 bis 14,
**dadurch gekennzeichnet,**
**dass** die Rückwand (31) um eine Achse (27b) verschwenkbar ist, die mit einer Drehachse (27b) eines Beschlags (27, 29), insbesondere eines Gelenkhebels (27) des Beschlages, zusammenfällt, über den das Rückenteil (15) mit einer Basis (21, 22) gelenkig verbunden ist.

## Claims

1. Seating furniture, in particular a sofa,
comprising at least two seating units, preferably three seating units (11), which are arranged next to one another and which each have a seat part (13) and a back part (15),
wherein the back part (15) at at least one of the seating units (11) is adjustable relative to the seat part (13) between a sitting position and a placement position in which the rear side of the back part (15) forms a placement surface (47); and
wherein a rear wall (31) is arranged behind the back part (15) and the back part (15) comprises at least two placement plates (17, 19) which together form the placement surface (47) in the placement position and for which an adjustment mechanism is provided which is active on the adjustment of the back part (15) and which moves, in particular pivots, the placement plates (17, 19) relative to one another between the sitting position and the placement position,
**characterized in that**
the rear wall (31) is adjustable by adjusting the back part (15).

2. Seating furniture in accordance with claim 1,
**characterized in that**
a region of the back part (15) which is a lower region in the sitting position is raised on the adjustment of the back part (15) into the placement position.

3. Seating furniture in accordance with claim 1 or claim 2,
**characterized in that**
an adjustment movement of a second placement plate (19) is controllable jointly by means of the back part (15) and a holding-back device (23) anchored to a base (21, 22).

4. Seating furniture in accordance with claim 3,
**characterized in that**
the second placement plate (19) is pivotable about a pivot region (25) which is movable together with the back part (15), with the holding-back device (23) engaging at the second placement plate (19) at a spacing from the pivot region (25).

5. Seating furniture in accordance with claim 3 or claim 4, **characterized in that**
the holding-back device (23) is variable in length against a restoring force and in particular comprises at least one elastic band or at least one elastic belt.

6. Seating furniture in accordance with any one of the preceding claims, **characterized in that**
the back part (15) is connected in an articulated manner to a base (21, 22) via a fitting (27, 29), in particular via a lift-flap fitting, with the fitting in particular comprising a four-bar lever (27, 29).

7. Seating furniture in accordance with claim 6,
**characterized in that**
the fitting comprises two articulated levers (27, 29) which are in particular angled once or a multiple of times and which are connected in an articulated manner to the back part (15) and to the base (21, 22) at respective mutually spaced apart rotary axles (27a, 27b, 29a, 29b).

8. Seating furniture in accordance with claim 7,
**characterized in that**,
in the sitting position, the rotary axles (27a, 29a) of the back part (15) are disposed in a plane which extends at least substantially in parallel with a plane in which the rotary axles (27b, 29b) of the base (21, 22) are disposed.

9. Seating furniture in accordance with claim 7 or claim 8, **characterized in that**,
in the placement position, the rotary axles (27a, 29a) of the back part (15) are disposed in a plane which extends at least substantially horizontally.

10. Seating furniture in accordance with any one of the preceding claims, **characterized in that**
the rear wall (31) at least partly covers the placement plates (17, 19) in the sitting position.

11. Seating furniture in accordance with claim 10,
**characterized in that**
a gap present between a first placement plate (17) and the rear wall (31) is at least substantially closed or bridged by a second placement plate (19) in the placement position.

12. Seating furniture in accordance with claim 10 or claim 11, **characterized in that**
the rear wall (31) is adjustable, in particular pivotable, between a sitting position and a placement position.

13. Seating furniture in accordance with any one of the claims 10 to 12, **characterized in that**
the rear wall (31) is adjustable by adjusting the back part (15) by means of a fitting (27, 29) via which the back part (15) is connected in an articulated manner to a base (21, 22).

14. Seating furniture in accordance with any one of the claims 10 to 13, **characterized in that**
the back part (15) and the rear wall (31) are forcibly coupled by a fitting (27, 29), in particular by a lift-flap fitting.

15. Seating furniture in accordance with any one of the claims 10 to 14, **characterized in that**
the rear wall (31) is pivotable about an axle (27b) which coincides with a rotary axle (27b) of a fitting (27, 29), in particular of an articulated lever (27) of the fitting, via which fitting the back part (15) is connected in an articulated manner to a base (21, 22).

## Revendications

1. Meuble d'assise, en particulier sofa,
comportant au moins deux, de préférence trois unités formant siège (11) agencées les unes à côté des autres et comportant chacune une assise (13) et un dossier (15),
dans lequel
sur l'une au moins des unités formant siège (11), le dossier (15) est réglable par rapport à l'assise (13) entre une position d'assise et une position de dépose dans laquelle le côté arrière du dossier (15) constitue une surface de dépose (47),
une paroi arrière (31) est agencée en arrière du dossier (15), et
le dossier (15) comprend au moins deux panneaux de dépose (17, 19) qui forment conjointement la surface de dépose (47) dans la position de dépose et pour lesquels est prévu un mécanisme de réglage efficace lors du réglage du dossier (15), qui déplace, en particulier par basculement, les panneaux de dépose (17, 19) l'un par rapport à l'autre entre la position d'assise et la position de dépose ;
**caractérisé en ce que**
la paroi arrière (31) est réglable par réglage du dossier (15).

2. Meuble d'assise selon la revendication 1,
**caractérisé en ce que**
lors du réglage du dossier (15) jusque dans la position de dépose, une zone du dossier (15) inférieure dans la position d'assise est relevée.

3. Meuble d'assise selon la revendication 1 ou 2,
**caractérisé en ce que**
un mouvement de réglage d'un second panneau de dépose (19) peut être commandé conjointement à l'aide du dossier (15) et d'un moyen de retenue (23) ancré sur une base (21, 22).

4. Meuble d'assise selon la revendication 3,
**caractérisé en ce que**
le second panneau de dépose (19) est mobile en basculement autour d'une zone de basculement (25) mobile conjointement avec le dossier (15), le moyen de retenue (23) attaquant le second panneau de dépose (19) à une distance de la zone de basculement (25).

5. Meuble d'assise selon la revendication 3 ou 4,
**caractérisé en ce que**
le moyen de retenue (23) est variable en longueur à l'encontre d'une force de rappel et comprend en particulier au moins une bande élastique ou au moins une sangle élastique.

6. Meuble d'assise selon l'une des revendications précédentes, **caractérisé en ce que**
le dossier (15) est relié en articulation à une base (21, 22) par une ferrure (27, 29), en particulier par une ferrure de relèvement/rabattement, et en particulier la ferrure comprend un levier à quatre articulations (27, 29).

7. Meuble d'assise selon la revendication 6,
**caractérisé en ce que**
la ferrure comprend deux leviers articulés (27, 29) en particulier coudés une ou plusieurs fois, qui sont articulés au dossier (15) et à la base (21, 22) chacun sur des axes de rotation (27a, 27b, 29a, 29b) écartés les uns des autres.

8. Meuble d'assise selon la revendication 7,
**caractérisé en ce que**
dans la position d'assise, les axes de rotation (27a, 29a) du dossier (15) se situent dans un plan qui s'étend au moins sensiblement parallèlement à un plan dans lequel se situent les axes de rotation (27b, 29b) de la base (21, 22).

9. Meuble d'assise selon la revendication 7 ou 8,
**caractérisé en ce que**
dans la position de dépose, les axes de rotation (27a, 29a) du dossier (15) se situent dans un plan qui s'étend au moins sensiblement horizontalement.

10. Meuble d'assise selon l'une des revendications précédentes, **caractérisé en ce que**
dans la position d'assise, la paroi arrière (31) recouvre au moins partiellement les panneaux de dépose (17, 19).

11. Meuble d'assise selon la revendication 10,
**caractérisé en ce que**
dans la position de dépose, une lacune existante entre un premier panneau de dépose (17) et la paroi arrière (31) est au moins sensiblement fermée ou comblée par un second panneau de dépose (19).

12. Meuble d'assise selon la revendication 10 ou 11,
**caractérisé en ce que**
la paroi arrière (31) est réglable, en particulier par basculement, entre une position d'assise et une position de dépose.

13. Meuble d'assise selon l'une des revendications 10 à 12,
**caractérisé en ce que**
la paroi arrière (31) est réglable par réglage du dossier (15) à l'aide d'une ferrure (27, 29) par laquelle le dossier (15) est relié en articulation à une base (21, 22).

14. Meuble d'assise selon l'une des revendications 10 à 13, **caractérisé en ce que**
le dossier (15) et la paroi arrière (31) sont couplés à force par une ferrure (27, 29), en particulier par une ferrure de relèvement/rabattement.

15. Meuble d'assise selon l'une des revendications 10 à 14, **caractérisé en ce que**
la paroi arrière (31) est mobile en basculement autour d'un axe (27b) qui coïncide avec un axe de rotation (27b) d'une ferrure (27, 29), en particulier d'un levier articulé (27) de la ferrure, par laquelle/lequel le dossier (15) est relié en articulation à une base (21, 22).
